# FASCICULE DE BREVET EUROPEEN

(11) **EP 2 067 639 B1**
(45) Date de publication et mention de la délivrance du brevet: **06.06.2012**
(21) Numéro de dépôt: 09156402.1
(22) Date de dépôt: 12.01.2005
(51) Int. Cl.: B60H 1/00

(54) **Installation de chauffage, ventilation et/ou climatisation d'un véhicule.**
Heizungs-, Lüftungs- und/oder Klimaanlage von Fahrzeugen
Heating, ventilation and/or air conditioning system of a vehicle

(30) Priorité: 17.02.2004 FR 0401557
(43) Date de publication de la demande: 10.06.2009
(62) Demande divisionnaire de: 05000459.7
(73) Titulaire: Valeo Systèmes Thermiques, 78321 Le Mesnil St Denis Cedex (FR)
(72) Inventeur: Decoux, Ludovic, 78990 Elancourt (FR)

(56) Documents cités:
- EP-A- 1 247 667
- EP-A- 1 319 540
- EP-A1- 1 564 045
- DE-A1- 19 757 280
- FR-A- 2 733 559
- JP-A- 63 305 018

## Description

La présente invention concerne une une installation de chauffage, ventilation et/ou climatisation d'un véhicule. L'unité de distribution d'air peut comprendre plusieurs volets pour contrôler le passage d'air à travers des bouches d'alimentation correspondant à des sorties s'ouvrant dans l'habitacle du véhicule.

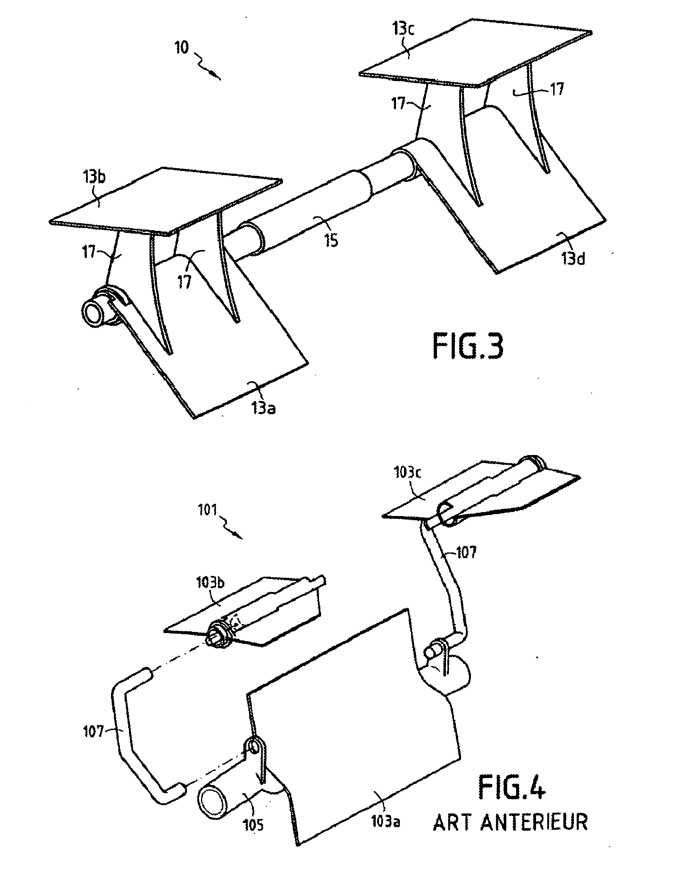

La figure 4 montre, de façon traditionnelle, une unité de distribution d'air 101 comportant un volet 103a en forme de papillon, sur un axe central 105 ainsi que deux autres volets 103b et 103c reliés sur l'axe central 105 par l'intermédiaire de deux bielles 107. Les volets 103b et 103c sont décalés par rapport à l'axe central 105 et tournent autour des axes séparés de cet axe central 105.

La commande de l'unité de distribution d'air 101 est assurée par un moteur pas à pas (non représenté) qui agit sur un seul volet, en l'occurrence le volet 103 disposé sur l'axe central 105. Ceci peut engendrer un problème de fermeture au niveau des volets 103b et 103c qui ne sont pas directement commandés par le moteur provoquant des fuites d'air. II en résulte aussi un problème d'effort de commande.

Un autre problème concerne la tenue des bielles 107 sur les volets 103b et 103c durant la vie du véhicule. En effet, il peut y avoir un problème de rupture de liaison par un désengagement d'au moins une bielle de sa position de montage.

De plus, ces bielles 107 sont en métal, d'où un risque de corrosion.

La présente invention a pour but de remédier à ces inconvénients et propose à cet effet une unité de distribution d'air plus simple et plus performante.

Ainsi, l'invention concerne une une installation de chauffage, ventilation et/ou climatisation d'un véhicule, comprenant une pluralité de volets pour contrôler le passage d'air à travers une pluralité de bouches d'alimentation de conduits de distribution d'air, lesdites bouches d'alimentation étant disposées selon une pluralité de plans distincts, caractérisé en ce que ladite pluralité de volets contrôle le passage d'air à travers ladite pluralité de bouches d'alimentation par rotation autour d'un axe unique.

Le fait que la pluralité de volets tourne autour d'un axe unique permet de supprimer les bielles, de simplifier le montage et de réduire les coûts.

En outre, la suppression des bielles enlève le risque de la tenue de celles-ci sur les volets.

De plus, il n'y a plus de problèmes d'étanchéités dûs aux dispersions entre des pièces différentes.

Un autre avantage est le fait que les différents volets, en tournant autour d'un axe unique, sont commandés en direct, sans aucun intermédiaire qui peut présenter des jeux de mouvements, d'où une amélioration des efforts de commande.

Avantageusement, l'axe unique porte ladite pluralité de volets.

L'unité de distribution d'air peut comporter trois ou quatre volets.

Selon une particularité de l'invention, l'unité de distribution d'air forme une pièce unique et mono-corps.

Selon une autre particularité de l'invention, la pluralité de bouches d'alimentation correspond à des sorties pieds haute et basse.

Avantageusement, l'unité de distribution d'air est une pièce moulée.

L'unité de distribution d'air peut être constituée en matériau plastique.

D'autres particularités et avantages du dispositif selon l'invention ressortiront mieux à la lecture de la description faite ci-après, à titre indicatif mais non limitatif, en référence aux dessins annexés sur lesquels :
- la figure 1 illustre une installation de chauffage, ventilation et/ou climatisation pour un véhicule automobile comportant des unités de distribution d'air ;
- la figure 2 illustre de façon schématique une unité de distribution d'air présentant un axe unique selon l'invention, montée dans l'installation de chauffage, ventilation et/ou climatisation de la figure 1 ;
- la figure 3 illustre de façon schématique l'unité de distribution d'air de la figure 2;
- la figure 4 illustre une unité de distribution d'air selon l'art antérieur.

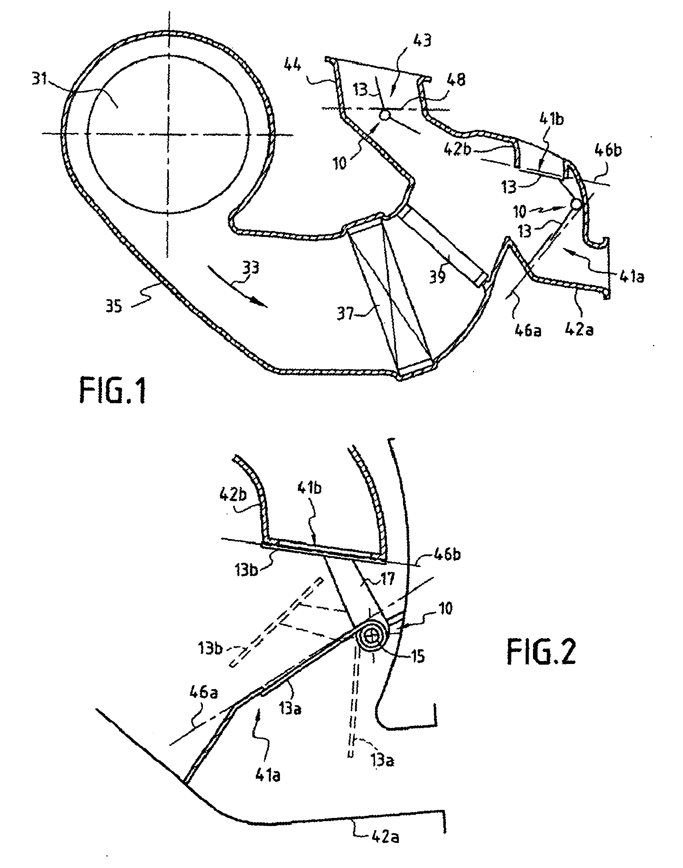

La figure 1 montre une installation de chauffage, ventilation et/ou climatisation de l'habitacle d'un véhicule, comportant, de façon bien connue, un groupe moto-ventilateur ou pulseur 31, délivrant un flux d'air 33 dans un conduit d'air 35. Dans ce dernier, sont disposés un évaporateur 37, et un radiateur de chauffage 39.

En aval de l'évaporateur 37, par rapport au sens du flux d'air 33, le conduit d'air 35 comporte des unités de distribution d'air 10 dont chacune peut comporter une pluralité de volets 13 pour contrôler le passage d'air à travers une pluralité de bouches d'alimentation 41a, 41b et 43, de conduits de distribution d'air 42a, 42b, 44 s'ouvrant dans l'habitacle du véhicule. Les bouches d'alimentation 41a, 41b et 43 sont disposées selon des plans distincts 46a, 46b, et 48 respectivement.

A titre d'exemple, les bouches d'alimentation 41a et 41b correspondent respectivement à des sorties pieds haute et basse et la bouche d'alimentation 43 correspond à une sortie aération.

En outre, chaque unité de distribution d'air 10 est commandée par un moteur pas à pas (non représenté), afin de contrôler la fermeture ou le niveau d'ouverture des bouches d'alimentation 41a, 41b et 43.

La figure 2 illustre une unité de distribution d'air 10 montée dans l'installation de chauffage, ventilation et/ou climatisation, au niveau selon cet exemple, des bouches d'alimentation 41b et 41a correspondant respectivement aux sorties pieds haute et basse.

Cette unité de distribution d'air comprend une pluralité de volets (deux volets 13a et 13b sont illustrés sur la figure 3) pour contrôler le passage d'air à travers les bouches d'alimentation 41a, 41b de conduits de distribution d'air 42a, 42b. Ces bouches d'alimentation 41a et 41b sont disposées respectivement selon les plans distincts 46a et 46b.

Conformément à l'invention, la pluralité de volets 13a, 13b contrôle le passage d'air à travers les bouches d'alimentation 41a, 41b par rotation autour d'un axe unique 15.

Cette figure montre en traits continus la position de fermeture des bouches d'alimentation correspondant aux sorties pieds par l'unité de distribution d'air 10. En particulier, le volet 13a ferme la bouche d'alimentation 41a correspondant à la sortie basse et le volet 13b ferme la bouche d'alimentation 41b correspondant à la sortie haute.

Il est aussi montré, en traits interrompus, une position d'ouverture des bouches de distribution d'air de sorties pieds par l'unité de distribution d'air 10.

La figure 3 illustre de façon schématique l'unité de distribution d'air 10 comprenant l'axe unique 15 qui porte un premier volet 13a, un deuxième volet 13b, un troisième volet 13c et un quatrième volet 13d.

Ainsi, les volets 13a, 13b, 13c, 13d et l'axe unique 15 forment une seule et même pièce. Autrement dit, l'unité de distribution d'air forme une pièce unique et monocorps. Par conséquent, l'effort de commande d'un moteur, agissant sur l'unité de distribution d'air 10, est optimal car aucun jeu de mouvement ne vient perturber la transmission d'effort de commande.

Avantageusement, l'unité de distribution d'air 10 est une pièce moulée. Cette unité de distribution d'air 10 peut être constituée en matériau plastique.

Selon cet exemple, les volets 13a, 13b, 13c et 13d sont sensiblement plans et sensiblement rectangulaires.

Il est aussi envisageable que chacun des volets ait une forme de papillon, une forme cylindrique de type tambour, ou une forme de drapeau. En outre, les volets d'une unité de distribution d'air peuvent avoir des formes différentes comportant une combinaison de tous ces types de volets.

Selon cet exemple, les premier et deuxième volets 13a, 13b sont disposés au niveau d'une extrémité de l'axe unique 15, tandis que les troisième et quatrième volets 13c, 13d sont disposés au niveau de l'autre extrémité de l'axe unique 15.

En particulier, les premier et quatrième volets 13a, 13d prennent naissance à partir des parties extrêmes de l'axe unique 15.

Les deuxième et troisième volets 13b et 13c sont décalés par rapport à l'axe unique 15 grâce à des bras de liaisons 17 reliant solidairement les volets 13b et 13c à l'axe unique 15.

Plus particulièrement, les deuxième et troisième volets 13b et 13c sont disposés en regard des extrémités de l'axe unique 15 et chacun des volets 13b, 13c est solidaire de l'axe 15 par l'intermédiaire de deux bras de liaisons 17.

Ainsi, les volets 13a, 13b, 13c et 13d, tout en tournant autour de l'axe unique 15, peuvent contrôler le passage d'air à travers des bouches d'alimentation disposées selon des plans distincts.

Bien entendu, la forme, la disposition, ou le nombre de volets peut être quelconque dépendant du nombre, de la forme ou de la disposition relative des bouches d'alimentation de l'installation de chauffage, ventilation et/ou climatisation.

## Revendications

1. Installation de chauffage, ventilation et/ou climatisation d'un véhicule comportant une pluralité de bouches d'alimentation (41a, 41b) de conduits de distribution d'air (42a, 42b) disposées selon une pluralité de plans distincts (46a, 46b), et au moins une unité de distribution d'air (10), notamment pour une installation de chauffage, ventilation et/ou climatisation d'un véhicule, comprenant une pluralité de volets (13a, 13b, 13c, 13d) pour contrôler le passage d'air à travers la pluralité de bouches d'alimentation (41a, 41b) par rotation autour d'un axe unique (15),
**caractérisée en ce qu'**un premier et un quatrième volets (13a, 13d) prennent naissance à partir des parties extrêmes de l'axe unique (15) et **en ce qu'**au moins un deuxième volet (13b) et un troisième volet (13c) sont disposés en regard des extrémités de l'axe unique (15) et sont décalés par rapport à l'axe unique (15) grâce à des bras de liaison (17) les reliant solidairement à l'axe unique (15), de sorte que, dans une position de fermeture, la pluralité de volets (13a, 13b, 13c, 13d) ferment respectivement la pluralité de bouches d'alimentation (41a, 41b), et, dans une position d'ouverture, ladite pluralité de volets (13a, 13b, 13c, 13d) ouvrent respectivement la pluralité de bouches d'alimentation (41a, 41b).

2. Installation de chauffage, ventilation et/ou climatisation selon la revendication 1, **caractérisée en ce que** ladite unité de distribution d'air (10) forme une pièce unique et mono-corps.

3. Installation de chauffage, ventilation et/ou climatisation selon la revendication 1, **caractérisée en ce que** la pluralité de bouches d'alimentation (41a, 41b) correspond à des sorties pieds haute et basse.

4. Installation de chauffage, ventilation et/ou climatisation selon l'une quelconque des revendications 1 à 3, **caractérisée en ce que** ladite unité de distribution d'air (10) est une pièce moulée.

5. Installation de chauffage, ventilation et/ou climatisation selon l'une quelconque des revendications 1 à 4, **caractérisée en ce que** ladite unité de distribution d'air (10) est constituée en matériau plastique.

## Claims

1. Heating, ventilation and/or air conditioning installation of a vehicle comprising a plurality of supply vents (41a, 41b) of air-distribution ducts (42a, 42b) placed on a plurality of distinct planes (46a, 46b), and at least one air distribution unit (10), notably for a heating, ventilation and/or air conditioning installation of a vehicle, comprising a plurality of flaps (13a, 13b, 13c, 13d) for controlling the passage of air through the plurality of supply vents (41a, 41b) by rotation about a single axle (15), **characterized in that** a first and a fourth flap (13a, 13d) originate from the end portions of the single axle (15) and **in that** at least a second flap (13b) and a third flap (13c) are placed facing the ends of the single axle (15) and are offset relative to the single axle (15) by virtue of connecting arms (17) connecting them securely to the single axle (15) so that, in a closed position, the plurality of flaps (13a, 13b, 13c, 13d) close respectively the plurality of supply vents (41a, 41b), and, in an open position, the said plurality of flaps (13a, 13b, 13c, 13d) open respectively the plurality of supply vents (41a, 41b).

2. Heating, ventilation and/or air conditioning installation according to Claim 1, **characterized in that** the said air distribution unit (10) forms a single and one-piece part.

3. Heating, ventilation and/or air conditioning installation according to Claim 1, **characterized in that** the plurality of supply vents (41a, 41b) corresponds to high and low feet outlets.

4. Heating, ventilation and/or air conditioning installation according to any one of Claims 1 to 3, **characterized in that** the said air distribution unit (10) is a moulded part.

5. Heating, ventilation and/or air conditioning installation according to any one of Claims 1 to 4, **characterized in that** the said air distribution unit (10) is made of plastic.

## Patentansprüche

1. Heizungs-, Belüftungs- und/oder Klimatisierungsanlage für ein Fahrzeug, die mehrere Versorgungsauslässe (41a, 41b) von Luftverteilungsleitungen (42a, 42b), die in mehreren verschiedenen Ebenen (46a, 46b) angeordnet sind, und wenigstens eine Luftverteilungseinheit (10) insbesondere für die Heizungs-, Belüftungs- und/oder Klimatisierungsanlage für ein Fahrzeug umfasst, die mehrere Klappen (13a, 13b, 13c, 13d) aufweist, um den Durchgang von Luft durch die mehreren Versorgungsauslässe (41a, 41b) durch Drehen um eine einzige Welle (15) zu steuern,
**dadurch gekennzeichnet, dass** eine erste und eine vierte Klappe (13a, 13d) von Endteilen der einzigen Welle (15) ausgehen,
und dass wenigstens eine zweite Klappe (13b) und eine dritte Klappe (13c) gegenüber den Enden der einzigen Welle (15) angeordnet sind und in Bezug auf die einzige Welle (15) mittels Verbindungsarmen (17) versetzt sind, die sie mit der einzigen Welle (15) fest verbinden, derart, dass in einer Schließposition die mehreren Klappen (13a, 13b, 13c, 13d) die jeweiligen mehreren Versorgungsauslässe (41a, 41b) verschließen und in einer Öffnungsposition die mehreren Klappen (13a, 13b, 13c, 13d) die jeweiligen mehreren Versorgungsauslässe (41a, 41b) freigeben.

2. Heizungs-, Belüftungs- und/oder Klimatisierungsanlage nach Anspruch 1, **dadurch gekennzeichnet, dass** die Luftverteilungseinheit (10) ein einziges und einteiliges Teil bildet.

3. Heizungs-, Belüftungs- und/oder Klimatisierungsanlage nach Anspruch 1, **dadurch gekennzeichnet, dass** die mehreren Versorgungsauslässe (41a, 41b) oberen und unteren Fußauslässen entsprechen.

4. Heizungs-, Belüftungs- und/oder Klimatisierungsanlage nach einem der Ansprüche 1 bis 3, **dadurch gekennzeichnet, dass** die Luftverteilungseinheit (10) ein gegossenes Teil ist.

5. Heizungs-, Belüftungs- und/oder Klimatisierungsanlage nach einem der Ansprüche 1 bis 4, **dadurch gekennzeichnet, dass** die Luftverteilungseinheit (10) aus Kunststoff gebildet ist.
